# EUROPÄISCHE PATENTSCHRIFT

(11) **EP 3 542 470 B1**
(45) Veröffentlichungstag und Bekanntmachung des Hinweises auf die Patenterteilung: **21.06.2023**
(21) Anmeldenummer: 17800491.7
(22) Anmeldetag: 13.11.2017
(51) Int. Cl.: B60W 30/14, B60W 50/00, G05D 1/02, B60W 30/16, H04B 10/114, H04B 10/116

(54) **VERFAHREN ZUM BETREIBEN EINER NICHT-SPURGEBUNDENEN KOLONNE VON FAHRZEUGEN SOWIE FAHRERASSISTENZSYSTEM UND NICHT-SPURGEBUNDENE KOLONNE**
METHOD FOR OPERATING A NON-TRACK-BOUND COLUMN OF VEHICLES AND DRIVER ASSISTANCE SYSTEM AND NON-TRACK BOUND COLUMN
PROCÉDÉ DE FONCTIONNEMENT D'UNE COLONNE DE VÉHICULES NON GUIDÉE SUR RAILS AINSI QUE SYSTÈME D'AIDE À LA CONDUITE ET COLONNE NON GUIDÉE SUR RAILS

(30) Priorität: 21.11.2016 DE 102016122325
(43) Veröffentlichungstag der Anmeldung: 25.09.2019
(73) Patentinhaber: KNORR-BREMSE Systeme für Nutzfahrzeuge GmbH, 80809 München (DE)
(72) Erfinder: KRUPPA, Philipp, 82194 Gröbenzell (DE); KLUFTINGER, Andre, 63924 Kleinheubach (DE)
(86) Internationale Anmeldenummer: PCT/EP2017/079091
(87) Internationale Veröffentlichungsnummer: WO 2018/091420

(56) Entgegenhaltungen:
- EP-A2- 0 762 364
- WO-A1-2016/178613
- DE-A1-102006 058 156
- DE-A1-102014 208 659
- US-A1- 2014 309 836

## Beschreibung

Die Erfindung betrifft ein Verfahren zum zumindest weitgehend automatisierten Betreiben einer nicht-spurgebundenen Kolonne bestehend aus wenigstens einem voraus fahrenden Fahrzeug und wenigstens einem mit dem voraus fahrenden Fahrzeug berührungslos gekoppelten, dem voraus fahrenden Fahrzeug unmittelbar folgenden Fahrzeug, gemäß dem Oberbegriff von Anspruch 1.

Die Erfindung betrifft auch ein Fahrerassistenzsystem, bei dem mittels einer Car-to-Car-Kommunikationseinrichtung wenigstens ein Fahrzeug innerhalb einer zumindest weitgehend automatisiert betriebenen, nicht-spurgebundenen Kolonne gehalten wird gemäß dem Oberbegriff von Anspruch 7 sowie eine zumindest weitgehend automatisiert betriebene, nicht-spurgebundene Kolonne bestehend aus wenigstens einem voraus fahrenden Fahrzeug und wenigstens einem mit dem Führungsfahrzeug berührungslos gekoppelten, dem voraus fahrenden Fahrzeug unmittelbar folgenden Fahrzeug gemäß dem Oberbegriff von Anspruch 13.

Ein Verfahren zum zumindest weitgehend automatisierten Betreiben einer nicht-spurgebundenen Kolonne, ein Fahrerassistenzsystem, bei dem mittels einer Car-to-Car-Kommunikationseinrichtung wenigstens ein Fahrzeug innerhalb einer zumindest weitgehend automatisiert betriebenen, nicht-spurgebundenen Kolonne gehalten wird, sowie eine nicht-spurgebundene Kolonne sind aus EP 3 091 520 A1 bekannt.

Es ist bekannt, mehrere nicht-spurgebundene Fahrzeuge so elektronisch miteinander zu koppeln, so dass diese weitgehend automatisiert mit nahezu konstantem, geringem Abstand hintereinanderfahren können. Die Abstände von jeweils unmittelbar hintereinander fahrenden Fahrzeugen können dabei so gewählt werden, dass die Fahrzeuge ähnlich einer Kolonne wirken. Zumindest das zweite und die weiteren Fahrzeuge der Kolonne weisen je ein längsführendes Fahrerassistenzsystem auf, das während der Kolonnenfahrt aktiv ist. Die Fahrzeuge der Kolonne werden über eine elektronische Steuerung und die längsführenden Fahrerassistenzsysteme so miteinander gesteuert, dass dieser automatisierte Fahrzustand gefahrlos realisiert werden kann.

Diese Art der elektronischen Kopplung von Fahrzeugen bzw. diese Art der Steuerung von Fahrzeugen wird in der Literatur auch mit den Begriffen "platooning", "automatische Kolonnenfahrt", "elektronische Deichsel" oder "Roadtrain" umschrieben. Dadurch kann eine bessere Straßenauslastung durch geringere Abstände zwischen den einzelnen Fahrzeugen, ein kontinuierlicherer Verkehrsfluss mit einer geringeren Anzahl an oder Häufigkeit von Staus, ein geringerer Energieverbrauch durch die aerodynamisch günstige Ausnutzung von Windschatten sowie eine Entlastung der Fahrer erreicht werden.

Dazu ist es notwendig, dass sämtliche in der Kolonne fahrende Fahrzeuge die entsprechenden Fahrassistenz- und Steuersysteme sowie eine Car-to-Car-Kommunikation (C2C) besitzen. C2C-Kommunikation steht für Car-to-Car-Kommunikation und bezeichnet eine Kommunikation von Fahrzeugen untereinander. Das heißt, dass die Fahrzeuge untereinander kommunizieren, um klarzustellen, welches Fahrzeug wem folgen soll. Bei einer Kolonnenfahrt gibt das erste Fahrzeug oder Führungsfahrzeug die Geschwindigkeit und Fahrtrichtung vor, weitere Fahrzeuge folgen mit einem geringen Abstand. Durch die mittels der Car-to-Car-Kommunikation (C2C) vernetzen Fahrzeuge reagieren diese schneller bei Bremsmanövern und können daher weniger Abstand zueinander halten als üblich.

Über die Car-to-Car-Kommunikation (C2C) kommunizieren die an einer Kolonnenfahrt beteiligten Fahrzeuge die Steuerbefehle und Informationen. Insbesondere gelangen die für den Kolonnenfahrbetrieb notwendigen Steuerbefehle und Informationen vom Führungsfahrzeug zu den nachfolgenden Fahrzeugen. Auch senden dem Führungsfahrzeug nachfolgende Fahrzeuge Daten zum Führungsfahrzeug zurück. Jedoch befinden sich die dafür üblicherweise vorgesehenen WLAN-Kommunikationseinrichtungen nach IEEE 802.11p bzw. ITS-G5 allerdings in einem noch nicht abgeschlossenen Optimierungs- und Standardisierungsprozess hinsichtlich der speziellen Erfordernisse für Anwendungen in Fahrzeugsicherheitssystemen. Technologische Herausforderungen dieser WLAN-Kommunikationseinrichtungen ergeben sich besonders durch den verwendeten Frequenzbereich bei 5,9 GHz. Bei dieser Frequenz ist die Dämpfung des Signals durch die verwendeten Kabel verhältnismäßig groß. Zusätzlich hängen die Ausbreitungseigenschaften der abgestrahlten elektromagnetischen Welle stark vom Ort der Anordnung der Antenne ab.

Die Anforderungen, welche Fahrzeugsysteme wie die automatische Kolonnenfahrt an die Kommunikation zwischen den Fahrzeugen stellen, s̅in̅d aus Sicht der funktionalen Sicherheit deutlich erhöht.

Ein gattungsgemäßes Verfahren, ein gattungsgemäßes Fahrerassistenzsystem sowie eine gattungsgemäße nicht-spurgebundene Kolonne sind aus EP 0 762 364 A2 bekannt. DE 10 2006 058 156 A1 beschreibt ein Kraftfahrzeug mit einer Außenbeleuchtung, welche zur Übertragung zumindest einer Fahrzeuginformation von zumindest einem Modulationssignal moduliert wird.

Der Erfindung liegt demgegenüber die Aufgabe zugrunde, ein Verfahren und ein Fahrerassistenzsystem sowie eine Kolonne der eingangserwähnten Art derart fortzubilden, dass eine hohe Sicherheit bei geringen Kosten erzielt wird.

Diese Aufgabe wird erfindungsgemäß durch die Merkmale von Anspruch 1, Anspruch 7 und Anspruch 13 gelöst.

### Offenbarung der Erfindung

Die Erfindung geht aus von einem Verfahren zum zumindest weitgehend automatisierten Betreiben einer nicht-spurgebundenen Kolonne bestehend aus wenigstens einem voraus fahrenden Fahrzeug und wenigstens einem mit dem voraus fahrenden Fahrzeug berührungslos gekoppelten, dem voraus fahrenden Fahrzeug unmittelbar folgenden Fahrzeug, wobei das wenigstens eine, dem voraus fahrenden Fahrzeug unmittelbar folgende Fahrzeug durch zumindest weitgehend automatische Steuerung/Regelung dem voraus fahrenden Fahrzeug nachfolgt, wobei für diese automatische Steuerung/Regelung eine Car-to-Car-Kommunikation zwischen dem voraus fahrenden Fahrzeug und dem wenigstens einen, dem voraus fahrenden Fahrzeug unmittelbar folgenden Fahrzeug erfolgt, wobei für zumindest einen Teil der Car-to-Car-Kommunikation eine photo-optische, lichtwellenleiterlose oder optisch faserlose Car-to-Car-Kommunikation herangezogen wird, welcher jeweils zwischen einem Lichtwellenemitter und einem Lichtwellenempfänger erfolgt.

Die Erfindung geht auch aus von einem Fahrerassistenzsystem, bei dem mittels einer Car-to-Car-Kommunikationseinrichtung wenigstens ein Fahrzeug innerhalb einer zumindest weitgehend automatisiert betriebenen, nicht-spurgebundenen und nicht-taktilen Kolonne gehalten wird, die aus einem voraus fahrenden Fahrzeug und wenigstens einem mit dem voraus fahrenden Fahrzeug berührungslos gekoppelten, dem voraus fahrenden Fahrzeug unmittelbar folgenden Fahrzeug besteht, wobei das wenigstens eine, dem voraus fahrenden Fahrzeug unmittelbar folgende Fahrzeug durch zumindest weitgehend automatische Steuerung/Regelung dem voraus fahrenden Fahrzeug nachfolgt. Die Funktion dieses Fahrerassistenzsystems besteht daher ausschließlich oder teilweise in der Steuerung/Regelung der Funktion nicht-taktile Kolonnenfahrt. Insbesondere können die Steuer-/Regelungsroutinen betreffend die Funktion nicht-taktile Kolonnenfahrt in einem separaten Steuergerät oder in einem Steuergerät eines anderen Fahrerassistenzsystems integriert sein, wobei bevorzugt jedes der an der Kolonne teilnehmenden Fahrzeuge mit einem solchen Steuergerät ausgestattet ist.

Die Erfindung geht auch aus von einer zumindest weitgehend automatisiert betriebenen, nicht-spurgebundenen Kolonne bestehend aus wenigstens einem voraus fahrenden Fahrzeug und wenigstens einem mit dem Führungsfahrzeug berührungslos gekoppelten, dem voraus fahrenden Fahrzeug unmittelbar folgenden Fahrzeug, wobei das wenigstens eine, dem voraus fahrenden Fahrzeug unmittelbar folgende Fahrzeug durch eine zumindest weitgehend automatische Steuerung/Regelung dem voraus fahrenden Fahrzeug nachfolgt, wobei für diese automatische Steuerung/Regelung eine Car-to-Car-Kommunikation zwischen dem voraus fahrenden Fahrzeug und dem wenigstens einen, dem voraus fahrenden Fahrzeug unmittelbar folgenden Fahrzeug vorgesehen ist, und wobei zumindest ein Teil der Car-to-Car-Kommunikation als photo-optische, lichtwellenleiterlose oder optisch faserlose Car-to-Car-Kommunikation vorgesehen ist, bei welcher die kontaktlose Kommunikation jeweils zwischen einem Lichtwellenemitter und einem Lichtwellenempfänger erfolgt.

Es geht daher bei der Erfindung um die Funktion einer zumindest weitgehend automatisierten, nicht-spurgebundenen Kolonnenfahrt mit einer nicht-taktilen Kopplung von wenigstens zwei Fahrzeugen. Bei den Fahrzeugen kann es sich um beliebige Kraftfahrzeuge handeln, insbesondere sind sowohl Personenkraftwagen (PKW) als auch Lastkraftwagen (LKW) möglich. Mehr als zwei Kraftfahrzeuge als Mitglieder der Kolonne sind auch möglich. Bevorzugt bewegen sich mehrere oder alle Fahrzeuge auf derselben Fahrspur als Kolonne fort. Das voraus fahrende Fahrzeug kann auch als Führungsfahrzeug bezeichnet werden.

Zumindest weitgehend automatisiert bedeutet, dass nicht alle Funktionen die Kolonnenfahrt betreffend die nicht-taktile, nicht-spurgebundene Kopplung von wenigstens zwei Fahrzeugen vollständig automatisiert sein müssen, aber können. Denkbar sind beispielsweise auch Eingriffe von außen, beispielsweise durch den Fahrer.

Gemäß dem Verfahren der Erfindung ist dann vorgesehen, dass als Lichtwellenemitter ein für wenigstens einen weiteren, von der photo-optischen Kommunikation abweichenden Zweck vorgesehener Lichtwellenemitter herangezogen wird oder vorgesehen ist. Weiterhin wird als Lichtwellenempfänger ein für wenigstens einen weiteren, von der photo-optischen Kommunikation abweichenden Zweck vorgesehener Lichtwellenempfänger herangezogen bzw. vorgesehen. Als der für den wenigstens einen weiteren, von der photo-optischen Kommunikation abweichenden Zweck vorgesehene Lichtwellenemitter wird ein Bremslicht, eine Begrenzungsleuchte oder ein Tagfahrlicht eines Fahrzeugs herangezogen oder vorgesehen. Weiterhin wird als der für den wenigstens einen weiteren, von der photo-optischen Kommunikation abweichenden Zweck vorgesehene Lichtwellenempfänger ein Licht-/Regensensor herangezogen bzw. vorgesehen.

Ein Licht-/Regensensor dient dem Ein- und Ausschalten eines Fahrlichts eines Fahrzeugs abhängig von der Helligkeit der Umgebung bzw. dem Ein- und Ausschalten eines Scheibenwischers eines Fahrzeugs abhängig vom Regengehalt der Umgebungsluft.

Gemäß dem Fahrerassistenzsystem der Erfindung wird als Lichtwellenemitter ein für wenigstens einen weiteren, von der photo-optischen Kommunikation abweichenden Zweck vorgesehener Lichtwellenemitter und herangezogen als Lichtwellenempfänger ein für wenigstens einen weiteren, von der photo-optischen Kommunikation abweichenden Zweck vorgesehener Lichtwellenempfänger vorgesehen, wobei als der für den wenigstens einen weiteren, von der photo-optischen Kommunikation abweichenden Zweck vorgesehene Lichtwellenemitter ein Bremslicht und/oder eine Begrenzungsleuchte und/oder ein Tagfahrlicht herangezogen wird und als der für den wenigstens einen weiteren, von der photo-optischen Kommunikation abweichenden Zweck vorgesehene Lichtwellenempfänger ein Licht-/Regensensor vorgesehen wird.

Gemäß der nicht-spurgebundene Kolonne der Erfindung wird als Lichtwellenemitter ein für wenigstens einen weiteren, von der photo-optischen Kommunikation abweichenden Zweck vorgesehener Lichtwellenemitter herangezogen oder vorgesehen. Weiterhin wird als Lichtwellenempfänger ein für wenigstens einen weiteren, von der photo-optischen Kommunikation abweichenden Zweck vorgesehener Lichtwellenempfänger herangezogen bzw. vorgesehen. Als der für den wenigstens einen weiteren, von der photo-optischen Kommunikation abweichenden Zweck vorgesehene Lichtwellenemitter wird ein Bremslicht, eine Begrenzungsleuchte oder ein Tagfahrlicht eines Fahrzeugs herangezogen oder vorgesehen. Weiterhin wird als der für den wenigstens einen weiteren, von der photo-optischen Kommunikation abweichenden Zweck vorgesehene Lichtwellenempfänger ein Licht-/Regensensor herangezogen bzw. vorgesehen.

Mit anderen Worten erfolgt die Car-to-Car-Kommunikation zwar photo-optisch, d.h. durch Lichtsignale, welche von einem Lichtwellenemitter ausgesandt und von einem Lichtwellenempfänger empfangen und dann ausgewertet werden. Jedoch erfolgt die Übertragung der Lichtsignale zwischen den Fahrzeugen der Kolonne ohne jegliche Verwendung von Lichtwellenleitern oder optischen Fasern oder weiteren zwischen den Fahrzeugen gezogenen gegenständlichen Verbindungen und damit im Freiraum (Luft) zwischen den Fahrzeugen "drahtlos". Die photo-optische Car-to-Car-Kommunikation findet dabei zwischen unmittelbar aufeinander folgenden Fahrzeugen der Kolonne statt, da andernfalls Lichtsignale von einem dazwischen fahrenden Fahrzeug verdeckt werden.

Die Lichtsignale werden im Rahmen eines modulierten Lichtsignal-Protokolls übertragen. Dabei werden bevorzugt durch einen elektro-optischen Modulator (EOM) z.B. mittels Amplitudenmodulation und/oder Frequenzmodulation modulierte Lichtsignale erzeugt, die mittels des Lichtwellenemitters in den Freiraum (Luft) zwischen unmittelbar aufeinander folgenden Fahrzeugen der Kolonne ausgegeben, vom Lichtwellenempfänger empfangen und beispielsweise von einer Auswerteelektronik in Form eines elektro-optischen Demodulators ausgewertet werden. Lichtwellenemitter und elektro-optischer Modulator (EOM) sowie Lichtwellenempfänger und elektro-optischer Demodulator sind beispielsweise jeweils durch eine lichtwellenleitende Verbindung verbunden, welche die Lichtsignale überträgt.

Vorteilhaft dabei ist, dass eine photo-optische C2C-Kommunikation durch Lichtsignale kostengünstiger darstellbar ist als etwa eine Funkverbindung über WLAN. Weiterhin photo-optische C2C-Kommunikation relativ unempfindlich gegenüber äußeren Störeinflüssen, da die optische Übertragungsstrecke bei Kolonnenfahrt relativ kurz ist. Außerdem liegt bei photo-optischer C2C-Kommunikation eine kürzere Latenzzeiten gegenüber WLAN-Lösungen vor.

Schließlich lässt sich auch eine im Sinne einer erhöhten funktionalen Sicherheit redundante C2C-Kommunikation realisieren, wenn zusätzlich zur photo-optischen C2C-Kommunikation noch eine funkbasierte C2C-Kommunikation z.B. durch WLAN vorgesehen wird.

Durch die in den Unteransprüchen aufgeführten Maßnahmen sind vorteilhafte Weiterbildungen und Verbesserungen der in Anspruch 1 angegebenen Erfindung möglich.

Besonders bevorzugt erfolgt die photo-optische Kommunikation durch Licht im Infrarot-Bereich und/oder im Ultra-Violettbereich. Um nicht andere Verkehrsteilnehmer durch die photo-optische Kommunikation zwischen den Fahrzeugen zu stören, findet daher die photo-optische Kommunikation bevorzugt im Bereich des nicht sichtbaren Lichts (Infrarot, Ultraviolett) oder im Bereich des sichtbaren Lichts statt, dann jedoch mit einer Taktfrequenz von größer als 30 Hz. Ein solches Licht wird vom Auge als permanent leuchtende Lichtquelle wahrgenommen. Denkbar ist auch eine Kombination aus beiden Lichtspektren (Infrarot, Ultraviolett und sichtbares Licht), um die Übertragungsbandbreite zu erhöhen.

Besonders bevorzugt sind der Lichtwellenemitter und der Lichtwellenempfänger an einem Fahrzeugheck des voraus fahrenden Fahrzeugs und an einer Fahrzeugfront des dem vorausfahrenden Fahrzeug unmittelbar folgenden Fahrzeug angeordnet, wobei der Lichtwellenemitter an dem voraus fahrenden Fahrzeug und der Lichtwellenempfänger an dem vorausfahrenden Fahrzeug unmittelbar folgenden Fahrzeug angeordnet sein können oder umgekehrt.

Gemäß einer Weiterbildung kann die photo-optische Kommunikation zwischen dem voraus fahrenden Fahrzeug und dem wenigstens einen, dem voraus fahrenden Fahrzeug unmittelbar folgenden Fahrzeug unidirektional oder bidirektional erfolgen.

Bei einer bidirektionalen photo-optischen Kommunikation zwischen einem vorausfahrenden Fahrzeug und einem unmittelbar nachfolgenden Fahrzeug werden Lichtsignale vom vorausfahrenden Fahrzeug von wenigstens einem dort angeordneten Lichtwellenemitter emittiert und vom unmittelbar nachfolgenden Fahrzeug von wenigstens einem dort angeordneten Lichtwellenempfänger empfangen und ausgewertet. Weiterhin werden auch Lichtsignale vom unmittelbar nachfolgenden Fahrzeug von wenigstens einem dort angeordneten Lichtwellenemitter emittiert und vom vorausfahrenden Fahrzeug von wenigstens einem dort angeordneten Lichtwellenempfänger empfangen und in einer Auswertelektronik ausgewertet.

Bei einer unidirektionalen photo-optischen Kommunikation werden bevorzugt Lichtsignale vom vorausfahrenden Fahrzeug von wenigstens einem dort angeordneten Lichtwellenemitter emittiert und vom nachfolgenden Fahrzeug von einem dort angeordneten Lichtwellenempfänger empfangen und ausgewertet. Denkbar ist aber auch die umgekehrte Richtung in Bezug auf Emission und Empfang von Lichtsignalen.

Bereits mit Hilfe einer unidirektionalen photo-optischen Kommunikation lassen sich Fahrerassistenzsysteme wie Notbremsassistenten verbessern, indem Informationen über die Verzögerung, die Fahrzeuggeschwindigkeit, über Bremsvorgänge, Straßenbeschaffenheit, etc. in einem Lichtsignal-Protokoll übertragen werden. So kann z.B. beim Bremsen das unmittelbar nachfolgende Fahrzeug auf die Verzögerung des vorausfahrenden Fahrzeugs geregelt werden.

Bevorzugt werden als Lichtwellenemitter wenigstens eine LED (Light-Emitting-Diode) und/oder wenigstens eine Laserdiode (LD) und als Lichtwellenempfänger wenigstens eine Photodiode verwendet bzw. vorgesehen. Dabei können die Lichtwellenemitter in Scheinwerfer, Rücklichtern oder Bremslichtern partiell oder vollständig integriert sein.

Bevorzugt kann zusätzlich zur photo-optischen Kommunikation zwischen dem voraus fahrenden Fahrzeug und dem wenigstens einen, dem voraus fahrenden Fahrzeug unmittelbar folgenden Fahrzeug eine von einer photo-optischen Kommunikation abweichende Kommunikation wie beispielsweise eine funkbasierte Kommunikation herangezogen werden oder vorgesehen sein. Dadurch entsteht eine redundante Kommunikation, nämlich einerseits photo-optisch und andererseits funkbasiert (elektromagnetische Wellen), so dass dadurch die funktionale Sicherheit erhöht wird.

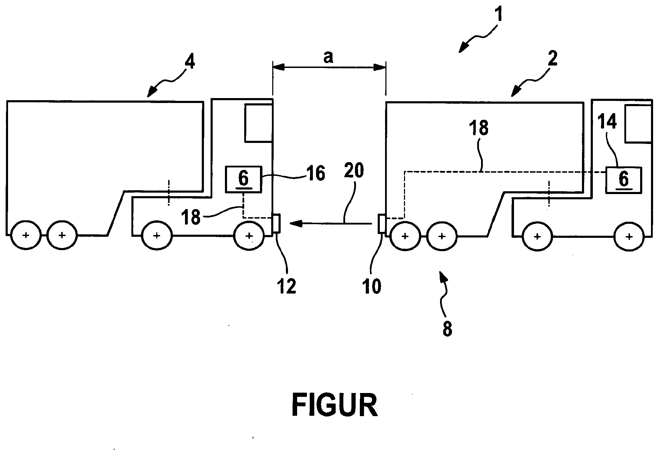

Weitere die Erfindung verbessernde Maßnahmen werden nachstehend gemeinsam mit der Beschreibung eines Ausführungsbeispiels der Erfindung anhand der Zeichnung näher dargestellt.

### Zeichnung

In der ein Ausführungsbeispiel der Erfindung darstellenden Zeichnung zeigt die einzige Figur schematisch eine Kolonne aus Fahrzeugen, welche nach einer bevorzugten Ausführungsform eines erfindungsgemäßen Verfahrens bzw. eines erfindungsgemäßen Fahrerassistenzsystems betrieben wird.

### Beschreibung des Ausführungsbeispiels

In der **Figur** ist schematisch eine nicht-spurgebundene, automatisch betriebene Kolonne 1 mit hier lediglich zwei Fahrzeugen, einem ersten Fahrzeug (Führungsfahrzeug) 2 und einem unmittelbar folgenden zweiten Fahrzeug 4 innerhalb der Kolonne dargestellt. Selbstverständlich ist die Kolonne 1 nicht auf die dargestellte Anzahl von zwei Fahrzeugen 2, 4 begrenzt. Die Kolonne 1 weist mindestens zwei Fahrzeuge auf, die maximale Anzahl an Fahrzeugen ist aber grundsätzlich nicht beschränkt.

In der **Figur** ist die Kolonne 1 gebildet aus Lastkraftwagen 2, 4 mit jeweils einem Sattelauflieger dargestellt. Selbstverständlich ist die vorliegende Erfindung nicht auf Kolonnen 1 beschränkt, die aus Lastkraftwagen 2, 4 gebildet sind. Es können grundsätzlich alle Kraftfahrzeugarten (Personenkraftwagen, Lastkraftwagen, Busse, Militärfahrzeuge aller Art, Motorräder etc.) eine nicht-spurgebundene, automatisch betriebene Kolonne 1 bilden, sofern sie jeweils über das entsprechende Fahrerassistenzsystem verfügen. Innerhalb einer nicht-spurgebundenen, automatisch betriebenen Kolonne 1 können selbstverständlich auch verschiedene Fahrzeugarten vorhanden sein.

Bei der dargestellten nicht-spurgebundenen, automatisch betriebenen Kolonne 1 ist das zweite, dem ersten Führungsfahrzeug 2 unmittelbar nachfolgende Fahrzeug 4 mit dem Führungsfahrzeug 2 automatisiert und berührungslos (nicht-taktil) gekoppelt. Auch weitere, hier nicht gezeigte Fahrzeuge der automatisch betriebenen Kolonne 1 sind mit dem jeweils voraus fahrenden Fahrzeug und/oder mit dem jeweils unmittelbar folgenden Fahrzeug berührungslos (nicht-taktil) gekoppelt bis hin zum letzten Fahrzeug der Kolonne 1, das mit dem vorletzten Fahrzeug der Kolonne 1 berührungslos (nicht-taktil) gekoppelt ist.

Die dem ersten vorausfahrenden Führungsfahrzeug 1 folgenden Fahrzeuge 2 folgen dem Führungsfahrzeug 1 zumindest weitgehend automatisch gesteuert nach. Hierzu verfügen zumindest die nachfolgenden Fahrzeuge 2 über die erforderlichen Sensoriken, Fahrerassistenzsysteme und Steuereinrichtungen zum automatischen Steuern und Regeln von Geschwindigkeit, Lenkung, Spurhaltung, Bremsen, etc.. Bereits seit längerer Zeit sind längsführende Fahrerassistenzsysteme für Fahrzeuge bekannt, die anhand geeigneter Brems- und Beschleunigungseingriffe den Abstand, meist in Form einer Zeitlücke, auf ein vorausfahrendes Fahrzeug regeln. Der bekannteste Vertreter solcher auch als Abstandsregelsysteme bezeichneten Fahrerassistenzsysteme sind die ACC-Systeme (Adaptive Cruise Control). Gemein haben derartige Systeme, dass über wenigstens einen Sensor, insbesondere einen Radarsensor und/oder eine Videokamera, Informationen über den Abstand und die Geschwindigkeit eines unmittelbar vorausfahrenden Kraftfahrzeugs gewonnen werden, auf denen dann die Abstandsregelung basiert. Bei ACC-Systemen ist diese Funktionalität kombiniert mit einer Geschwindigkeitsregelautomatik. Durch die Funktion automatisierte, nicht-spurgebundene Kolonnenfahrt mit einer nicht-taktilen Kopplung von wenigstens zwei Fahrzeugen wird der Anstand zwischen dem ersten vorausfahrenden Führungsfahrzeug 1 und dem unmittelbar nachfolgenden zweiten Fahrzeug 2 bzw. zwischen unmittelbar hintereinander fahrenden Fahrzeugen auf einen vorgegebenen (Minimal-)Abstand a gesteuert oder geregelt.

Die Art und Weise, wie eine automatisierte, nicht-spurgebundene Kolonnenfahrt mit einer nicht-taktilen Kopplung von wenigstens zwei Fahrzeugen 2, 4 bewerkstelligt werden kann, ist dem Fachmann daher aus einer Vielzahl an Patentveröffentlichungen bekannt.

Hier wird die Funktion einer automatisierten, nicht-spurgebundene Kolonnenfahrt mit einer nicht-taktilen Kopplung von wenigstens zwei Fahrzeugen 2, 4 im Rahmen eines Fahrerassistenzsystems zur Verfügung gestellt, wobei die Funktion dieses Fahrerassistenzsystems ausschließlich oder teilweise in der Steuerung/Regelung der Funktion der nicht-taktilen Kopplung/Kolonnenfahrt von wenigstens zwei Fahrzeugen 2, 4 besteht. Insbesondere können die Steuer-/Regelungsroutinen betreffend die Funktion der nicht-taktilen Kopplung von wenigstens zwei Fahrzeugen 2, 4 in einem separaten elektronischen Steuergerät 6 oder in einem elektronischen Steuergerät eines anderen Fahrerassistenzsystems integriert sein, wobei bevorzugt jedes der an der Kolonne 1 teilnehmenden Fahrzeuge 2, 4 mit einem solchen elektronischen Steuergerät 6 ausgestattet ist.

Das Fahrerassistenzsystem weist eine photo-optische Car-to-Car-Kommunikationseinrichtung auf, mit welcher die oben beschriebene Funktion einer automatisierten, nicht-spurgebundenen Kolonnenfahrt mit einer nicht-taktilen Kopplung von wenigstens zwei Fahrzeugen mittels Datenaustausch zwischen den an der Kolonne beteiligten Fahrzeugen bewerkstelligt wird.

Die photo-optische Car-to-Car-Kommunikationeinrichtung ist hier eine photo-optische, lichtwellenleiterlose oder optisch faserlose Kommunikationeinrichtung 8, bei welcher die Kommunikation jeweils zwischen einem Lichtwellenemitter 10 und einem Lichtwellenempfänger 12 erfolgt. Die Lichtsignale werden im Rahmen eines modulierten Lichtsignal-Protokolls übertragen. Dabei werden durch einen elektro-optischen Modulator (EOM) 14 z.B. mittels Amplitudenmodulation und/oder Frequenzmodulation modulierte Lichtsignale 20 erzeugt, die mittels des Lichtwellenemitters 10 in den Freiraum (Luft) zwischen den aufeinander folgenden Fahrzeugen 2, 4 der Kolonne 1 ausgegeben, vom Lichtwellenempfänger 12 empfangen und von einer Auswerteelektronik in Form eines elektro-optischen Demodulators 16 ausgewertet werden. Bei dem Ausführungsbeispiel der Figur ist der elektro-optische Modulator (EOM) 14 beispielsweise in das elektronische Steuergerät 6 des ersten Führungsfahrzeugs 2 und der elektro-optische Demodulator 16 in das elektronische Steuergerät 6 des zweiten unmittelbar folgenden Fahrzeugs 4 integriert. Zwischen dem elektro-optischen Modulator (EOM) 14 und dem Lichtwellenemitter 10 sowie zwischen dem elektro-optischen Demodulator 16 und dem Lichtwellenempfänger 12 besteht dann beispielsweise jeweils eine lichtwellenleitende Verbindung 18, beispielsweise durch Lichtwellenleiter oder optische Fasern.

Bei dem in der **Figur** gezeigten Ausführungsbeispiel wird eine unidirektionalen photo-optische Kommunikation zwischen dem vorausfahrenden ersten Fahrzeug 2 und dem unmittelbar nachfolgenden zweiten Fahrzeug 4 statt, indem Lichtsignale vom ersten vorausfahrenden Fahrzeug 2 von dem wenigstens einen dort angeordneten Lichtwellenemitter 10 emittiert und dann von wenigstens einem Lichtwellenempfänger 12 am zweiten, unmittelbar nachfolgenden Fahrzeug 4 empfangen und ausgewertet werden. Bei der hier beispielhaft gezeigten Ausführung ist der elektro-optischen Modulator (EOM) 14 daher zusammen mit dem wenigstens einen Lichtwellenemitter 10 auf dem ersten vorausfahrenden Fahrzeug 2 und der wenigstens eine Lichtwellenempfänger 12 sowie der elektro-optische Demodulator 16 an dem zweiten, unmittelbar nachfolgenden Fahrzeug 4 angeordnet.

Bevorzugt sind bei dem vorausfahrenden ersten Fahrzeug 2 als Lichtwellenemitter 10 wenigstens eine LED (Light-Emitting-Diode) und/oder wenigstens eine Laserdiode (LD) und dem zweiten, unmittelbar nachfolgenden zweiten Fahrzeug 4 als Lichtwellenempfänger 12 wenigstens eine Photodiode vorgesehen. Dabei wird der Lichtwellenemitter 10 beispielsweise separat am Fahrzeugheck, hier beispielsweise am Heck des Sattelaufliegers des vorausfahrenden ersten Fahrzeugs 2 und der Lichtwellenempfänger 12 beispielsweise an der Fahrzeugfront des zweiten, unmittelbar nachfolgenden Fahrzeugs 4 angeordnet. Lichtwellenemitter 10 und Lichtwellenempfänger 12 können jeweils separat vorgesehen und angeordnet sein oder aber auch in Scheinwerfer, Rücklichter oder Bremslichtern partiell oder vollständig integriert sein.

Alternativ können als Lichtwellenempfänger 12 und/oder als Lichtwellenemitter 10 ein für wenigstens einen weiteren, von der photo-optischen Kommunikation abweichenden Zweck vorgesehene Lichtwellenempfänger und/oder Lichtwellenemitter vorgesehen sein. Bevorzugt kann als der für den wenigstens einen weiteren, von der photo-optischen Kommunikation abweichenden Zweck vorgesehener Lichtwellenemitter 10 ein Bremslicht, ein Tagfahrlicht oder eine Begrenzungsleuchte des ersten vorausfahrenden Fahrzeugs 2 vorgesehen sein. Weiterhin kann als der für den wenigstens einen weiteren, von der photo-optischen Kommunikation abweichenden Zweck vorgesehener Lichtwellenempfänger 12 des zweiten, unmittelbar folgenden Fahrzeugs 4 eine Kamera oder ein Licht-/Regensensor vorgesehen sein. Eine solche Kamera kann insbesondere bereits für ein Fahrerassistenzsystem vorgesehen sein, dessen Funktion von der Funktion Kolonnenfahrt abweicht, z.B. eine Erkennung von Verkehrszeichen, von stationären oder sich bewegenden Objekten. Ein Licht-/Regensensor dient dem Ein- und Ausschalten eines Fahrlichts des zweiten Fahrzeugs 4 abhängig von der Helligkeit der Umgebung bzw. dem Ein- und Ausschalten eines Scheibenwischers des zweiten Fahrzeugs 4 abhängig vom Regengehalt der Umgebungsluft. Dabei ist abweichend von der **Figur** dann diese Kamera und/oder der Regensensor bevorzugt an oder im Führerhaus angeordnet.

Alternativ könnte auch eine bidirektionale photo-optische Kommunikation zwischen den beiden Fahrzeugen 2, 4 vorgesehen sein, wobei dann auf beiden Fahrzeugen 2, 4 Lichtwellenemitter 10 und Lichtwellenempfänger 12 sowie elektro-optische Modulatoren (EOM) 14 und elektro-optische Demodulatoren 16 vorgesehen sind.

### Bezugszeichenliste

- 1: Kolonne
- 2: erstes Fahrzeug
- 4: zweites Fahrzeug
- 6: Steuergerät
- 8: photo-optische Kommunikationseinrichtung
- 10: Lichtwellenemitter
- 12: Lichtwellenempfänger
- 14: elektro-optischer Modulator
- 16: elektro-optischer Demodulator
- 18: lichtwellenleitende Verbindung
- 20: Lichtsignal
- a: Abstand

## Patentansprüche

1. Verfahren zum zumindest weitgehend automatisierten Betreiben einer nicht-spurgebundenen Kolonne (1) bestehend aus wenigstens einem voraus fahrenden Fahrzeug (2) und wenigstens einem mit dem voraus fahrenden Fahrzeug (2) berührungslos gekoppelten, dem voraus fahrenden Fahrzeug (2) unmittelbar folgenden Fahrzeug (4), wobei das wenigstens eine, dem voraus fahrenden Fahrzeug (2) unmittelbar folgende Fahrzeug (4) durch zumindest weitgehend automatische Steuerung/Regelung dem voraus fahrenden Fahrzeug (2) nachfolgt, und wobei für diese automatische Steuerung/Regelung eine Car-to-Car-Kommunikation zwischen dem voraus fahrenden Fahrzeug (2) und dem wenigstens einen, dem voraus fahrenden Fahrzeug (2) unmittelbar folgenden Fahrzeug (4) erfolgt, wobei für zumindest einen Teil der Car-to-Car-Kommunikation eine photo-optische, lichtwellenleiterlose oder optisch faserlose Car-to-Car-Kommunikation herangezogen wird, welche jeweils zwischen einem Lichtwellenemitter (10) und einem Lichtwellenempfänger (12) erfolgt, **dadurch gekennzeichnet, dass** als Lichtwellenemitter (10) ein für wenigstens einen weiteren, von der photo-optischen Kommunikation abweichenden Zweck vorgesehener Lichtwellenemitter, und als Lichtwellenempfänger (12) ein für wenigstens einen weiteren, von der photo-optischen Kommunikation abweichenden Zweck vorgesehener Lichtwellenempfänger herangezogen wird, wobei als der für den wenigstens einen weiteren, von der photo-optischen Kommunikation abweichenden Zweck vorgesehener Lichtwellenemitter (10) ein Bremslicht und/oder eine Begrenzungsleuchte und/oder ein Tagfahrlicht und als der für den wenigstens einen weiteren, von der photo-optischen Kommunikation abweichenden Zweck vorgesehener Lichtwellenempfänger (12) ein Licht-/Regensensor herangezogen wird, wobei der Licht-/Regensensor dem Ein- und Ausschalten eines Fahrlichts des Fahrzeugs abhängig von der Helligkeit der Umgebung oder dem Ein- und Ausschalten eines Scheibenwischers des Fahrzeugs abhängig vom Regengehalt der Luft dient.

2. Verfahren nach Anspruch 1, **dadurch gekennzeichnet, dass** durch einen elektro-optischen Modulator (14) modulierte Lichtsignale (20) erzeugt, mittels des Lichtwellenemitters (10) in den Freiraum zwischen zwei unmittelbar aufeinander folgenden Fahrzeugen (2, 4) der Kolonne (1) ausgegeben, vom Lichtwellenempfänger (12) empfangen und von einem elektro-optischen Demodulator (16) ausgewertet werden.

3. Verfahren nach Anspruch 1 oder 2, **dadurch gekennzeichnet, dass** die photo-optische Kommunikation durch Licht im Infrarot-Bereich und/oder im Ultra-Violettbereich erfolgt.

4. Verfahren nach einem der vorhergehenden Ansprüche, **dadurch gekennzeichnet, dass** die photo-optische Kommunikation zwischen dem vorausfahrenden Fahrzeug (2) und dem wenigstens einen, dem vorausfahrenden Fahrzeug (2) unmittelbar folgenden Fahrzeug (4) unidirektional oder bidirektional erfolgt.

5. Verfahren nach einem der vorhergehenden Ansprüche, **dadurch gekennzeichnet, dass** als Lichtwellenemitter (10) wenigstens eine LED (Light-Emitting-Diode) und/oder eine Laserdiode (LD) und als Lichtwellenempfänger (12) wenigstens eine Photodiode verwendet wird.

6. Verfahren nach einem der vorhergehenden Ansprüche, **dadurch gekennzeichnet, dass** zusätzlich zur photo-optischen Kommunikation zwischen dem vorausfahrenden Fahrzeug (2) und dem wenigstens einen, dem vorausfahrenden Fahrzeug (2) unmittelbar folgenden Fahrzeug (4) eine von einer photo-optischen Kommunikation abweichende Kommunikation erfolgt.

7. Fahrerassistenzsystem, bei dem mittels einer Car-to-Car-Kommunikationseinrichtung (8) wenigstens ein Fahrzeug innerhalb einer zumindest weitgehend automatisiert betriebenen, nicht-spurgebundenen Kolonne (1) gehalten wird, die aus einem voraus fahrenden Fahrzeug (2) und wenigstens einem mit dem voraus fahrenden Fahrzeug (2) berührungslos gekoppelten, dem voraus fahrenden Fahrzeug (2) unmittelbar folgenden Fahrzeug (4) besteht, wobei das wenigstens eine, dem voraus fahrenden Fahrzeug (2) unmittelbar folgende Fahrzeug (4) durch zumindest weitgehend automatische Steuerung/Regelung dem voraus fahrenden Fahrzeug (2) nachfolgt, wobei zumindest ein Teil der Car-to-Car-Kommunikationeinrichtung (8) als photo-optische, lichtwellenleiterlose oder optisch faserlose Car-to-Car-Kommunikationeinrichtung vorgesehen ist, bei welcher die Kommunikation jeweils zwischen einem Lichtwellenemitter (10) und einem Lichtwellenempfänger (12) vorgesehen ist, **dadurch gekennzeichnet, dass** als Lichtwellenemitter (10) ein für wenigstens einen weiteren, von der photo-optischen Kommunikation abweichenden Zweck vorgesehener Lichtwellenemitter vorgesehen ist, und dass als Lichtwellenempfänger (12) ein für wenigstens einen weiteren, von der photo-optischen Kommunikation abweichenden Zweck vorgesehener Lichtwellenempfänger vorgesehen ist, wobei als der für den wenigstens einen weiteren, von der photo-optischen Kommunikation abweichenden Zweck vorgesehene Lichtwellenemitter (10) ein Bremslicht und/oder eine Begrenzungsleuchte und/oder ein Tagfahrlicht vorgesehen ist und dass als der für den wenigstens einen weiteren, von der photo-optischen Kommunikation abweichenden Zweck vorgesehene Lichtwellenempfänger (12) ein Licht-/Regensensor vorgesehen ist, wobei der Licht-/Regensensor entsprechend dem weiteren, von der photo-optischen Kommunikation abweichenden Zweck dem Ein- und Ausschalten eines Fahrlichts des Fahrzeugs abhängig von der Helligkeit der Umgebung oder dem Ein- und Ausschalten eines Scheibenwischers des Fahrzeugs abhängig vom Regengehalt der Luft dient.

8. Fahrerassistenzsystem nach Anspruch 7, **dadurch gekennzeichnet, dass** die Car-to-Car-Kommunikationeinrichtung wenigstens einen elektro-optischen Modulator (14) und wenigstens einen elektro-optischen Demodulator (16) aufweist, wobei
a) der elektro-optische Modulator (14) ausgebildet ist, dass er modulierte Lichtsignale (20) erzeugt, und
b) der Lichtwellenemitter (10) ausgebildet ist, dass er die modulierten Lichtsignale in den Freiraum zwischen zwei unmittelbar aufeinander folgenden Fahrzeugen (2, 4) der Kolonne (1) ausgibt, und
c) der Lichtwellenempfänger (12) ausgebildet ist, dass er die modulierten Lichtsignale empfängt, und
d) der Demodulator (16) ausgebildet ist, dass er die modulierten Lichtsignale auswertet.

9. Fahrerassistenzsystem nach Anspruch 7 oder 8, **dadurch gekennzeichnet, dass** die photo-optische Kommunikation durch Licht im Infrarot-Bereich und/oder im Ultra-Violettbereich vorgesehen ist.

10. Fahrerassistenzsystem nach einem der Ansprüche 7 bis 9, **dadurch gekennzeichnet, dass** die photo-optische Kommunikation zwischen dem vorausfahrenden Fahrzeug (2) und dem wenigstens einen, dem vorausfahrenden Fahrzeug (2) unmittelbar folgenden Fahrzeug (4) unidirektional oder bidirektional vorgesehen ist.

11. Fahrerassistenzsystem nach einem der Ansprüche 7 bis 10, **dadurch gekennzeichnet, dass** als Lichtwellenemitter (10) wenigstens eine LED (Light-Emitting-Diode) und/oder eine Laserdiode (LD) und als Lichtwellenempfänger (12) wenigstens eine Photodiode vorgesehen ist.

12. Fahrerassistenzsystem nach einem der Ansprüche 7 bis 11, **dadurch gekennzeichnet, dass** zusätzlich zur photo-optischen Kommunikation zwischen dem voraus fahrenden Fahrzeug (2) und dem wenigstens einen, dem voraus fahrenden Fahrzeug (2) unmittelbar folgenden Fahrzeug (4) eine von einer photo-optischen Kommunikation abweichende Kommunikation vorgesehen ist.

13. Zumindest weitgehend automatisiert betriebene, nicht-spurgebundene Kolonne (1) bestehend aus wenigstens einem voraus fahrenden Fahrzeug (2) und wenigstens einem mit dem Führungsfahrzeug (2) berührungslos gekoppelten, dem voraus fahrenden Fahrzeug (2) unmittelbar folgenden Fahrzeug (4), wobei das wenigstens eine, dem voraus fahrenden Fahrzeug (2) unmittelbar folgende Fahrzeug (4) durch eine zumindest weitgehend automatische Steuerung/Regelung dem voraus fahrenden Fahrzeug (2) nachfolgt, und wobei für diese automatische Steuerung/Regelung eine Car-to-Car-Kommunikation zwischen dem voraus fahrenden Fahrzeug (2) und dem wenigstens einen, dem voraus fahrenden Fahrzeug (2) unmittelbar folgenden Fahrzeug (4) vorgesehen ist, wobei zumindest ein Teil der Car-to-Car-Kommunikation als photo-optische, lichtwellenleiterlose oder optisch faserlose Car-to-Car-Kommunikation vorgesehen ist, bei welcher die Car-to-Car-Kommunikation jeweils zwischen einem Lichtwellenemitter (10) und einem Lichtwellenempfänger (12) erfolgt, **dadurch gekennzeichnet, dass** als Lichtwellenemitter (10) ein für wenigstens einen weiteren, von der photo-optischen Kommunikation abweichenden Zweck vorgesehener Lichtwellenemitter vorgesehen ist, und dass als Lichtwellenempfänger (12) ein für wenigstens einen weiteren, von der photo-optischen Kommunikation abweichenden Zweck vorgesehener Lichtwellenempfänger vorgesehen ist, wobei als der für den wenigstens einen weiteren, von der photo-optischen Kommunikation abweichenden Zweck vorgesehener Lichtwellenemitter (10) ein Bremslicht und/oder eine Begrenzungsleuchte und/oder ein Tagfahrlicht herangezogen wird und dass als der für den wenigstens einen weiteren, von der photo-optischen Kommunikation abweichenden Zweck vorgesehene Lichtwellenempfänger (12) ein Licht-/Regensensor vorgesehen ist, wobei der Licht-/Regensensor entsprechend dem weiteren, von der photo-optischen Kommunikation abweichenden Zweck dem Ein- und Ausschalten eines Fahrlichts des Fahrzeugs abhängig von der Helligkeit der Umgebung oder dem Ein- und Ausschalten eines Scheibenwischers des Fahrzeugs abhängig vom Regengehalt der Luft dient.

## Claims

1. Method for operating a non-track-bound convoy (1), consisting of at least one vehicle (2) travelling ahead and at least one vehicle (4) that is contactlessly coupled to the vehicle (2) travelling ahead and directly follows the vehicle (2) travelling ahead, in at least largely automated fashion, wherein the at least one vehicle (4) directly following the vehicle (2) travelling ahead follows the vehicle (2) travelling ahead by means of at least largely automatic open-loop/closed-loop control, and wherein a car-to-car communication between the vehicle (2) travelling ahead and the at least one vehicle (4) directly following the vehicle (2) travelling ahead is effected for this automatic open-loop/closed-loop control, wherein a photo-optical, optical-waveguide-less or optical-fibre-less car-to-car communication, effected in each case between a light wave emitter (10) and a light wave receiver (12), is used for at least part of the car-to-car communication, **characterized in that** the light wave emitter (10) used is a light wave emitter intended for at least one further purpose, other than the photo-optical communication, and the light wave receiver (12) used is a light wave receiver intended for at least one further purpose, other than the photo-optical communication, wherein the light wave emitter (10) used that is intended for the at least one further purpose, other than the photo-optical communication, is a brake light and/or a clearance lamp and/or a daytime running light, and the light wave receiver (12) used that is intended for the at least one further purpose, other than the photo-optical communication, is a light/rain sensor, wherein the light/rain sensor is used for switching on and off a low beam of the vehicle depending on the brightness of the surroundings or for switching on and off a windshield wiper of the vehicle depending on the rain content of the air.

2. Method according to Claim 1, **characterized in that** light signals (20) modulated by an electro-optical modulator (14) are generated, output into the free space between two directly successive vehicles (2, 4) of the convoy (1) by means of the light wave emitter (10), received by the light wave receiver (12) and evaluated by an electro-optical demodulator (16).

3. Method according to Claim 1 or 2, **characterized in that** the photo-optical communication is effected by means of light in the infrared range and/or in the ultraviolet range.

4. Method according to one of the preceding claims, **characterized in that** the photo-optical communication between the vehicle (2) travelling ahead and the at least one vehicle (4) directly following the vehicle (2) travelling ahead is effected unidirectionally or bidirectionally.

5. Method according to one of the preceding claims, **characterized in that** the light wave emitter (10) used is at least one LED (light-emitting diode) and/or a laser diode (LD), and the light wave receiver (12) used is at least one photodiode.

6. Method according to one of the preceding claims, **characterized in that** a communication other than a photo-optical communication is effected in addition to the photo-optical communication between the vehicle (2) travelling ahead and the at least one vehicle (4) directly following the vehicle (2) travelling ahead.

7. Driver assistance system in which a car-to-car communication device (8) is used to keep at least one vehicle within a non-track-bound convoy (1) operated in at least largely automated fashion that consists of a vehicle (2) travelling ahead and at least one vehicle (4) that is contactlessly coupled to the vehicle (2) travelling ahead and directly follows the vehicle (2) travelling ahead, wherein the at least one vehicle (4) directly following the vehicle (2) travelling ahead follows the vehicle (2) travelling ahead by means of at least largely automatic open-loop/closed-loop control, wherein at least part of the car-to-car communication device (8) is provided for as a photo-optical, optical-waveguide-less or optical-fibre-less car-to-car communication device in which the communication is effected in each case between a light wave emitter (10) and a light wave receiver (12), **characterized in that** the light wave emitter (10) provided for is a light wave emitter intended for at least one further purpose, other than the photo-optical communication, and **in that** the light wave receiver (12) provided for is a light wave receiver intended for at least one further purpose, other than the photo-optical communication, wherein the light wave emitter (10) provided for that is intended for the at least one further purpose, other than the photo-optical communication, is a brake light and/or a clearance lamp and/or a daytime running light, and **in that** the light wave receiver (12) provided for that is intended for the at least one further purpose, other than the photo-optical communication, is a light/rain sensor, wherein the light/rain sensor, in accordance with the further purpose, other than the photo-optical communication, is used for switching on and off a low beam of the vehicle depending on the brightness of the surroundings or for switching on and off a windshield wiper of the vehicle depending on the rain content of the air.

8. Driver assistance system according to Claim 7, **characterized in that** the car-to-car communication device has at least one electro-optical modulator (14) and at least one electro-optical demodulator (16), wherein
a) the electro-optical modulator (14) is designed to generate modulated light signals (20), and
b) the light wave emitter (10) is designed to output the modulated light signals into the free space between two directly successive vehicles (2, 4) of the convoy (1), and
c) the light wave receiver (12) is designed to receive the modulated light signals, and
d) the demodulator (16) is designed to evaluate the modulated light signals.

9. Driver assistance system according to Claim 7 or 8, **characterized in that** the photo-optical communication provided for is by means of light in the infrared range and/or in the ultraviolet range.

10. Driver assistance system according to one of Claims 7 to 9, **characterized in that** the photo-optical communication between the vehicle (2) travelling ahead and the at least one vehicle (4) directly following the vehicle (2) travelling ahead is provided for unidirectionally or bidirectionally.

11. Driver assistance system according to one of Claims 7 to 10, **characterized in that** the light wave emitter (10) provided for is at least one LED (light-emitting diode) and/or a laser diode (LD), and the light wave receiver (12) provided for is at least one photodiode.

12. Driver assistance system according to one of Claims 7 to 11, **characterized in that** a communication other than a photo-optical communication is provided for in addition to the photo-optical communication between the vehicle (2) travelling ahead and the at least one vehicle (4) directly following the vehicle (2) travelling ahead.

13. Non-track-bound convoy (1), consisting of at least one vehicle (2) travelling ahead and at least one vehicle (4) that is contactlessly coupled to the leading vehicle (2) and directly follows the vehicle (2) travelling ahead, that is operated in at least largely automated fashion, wherein the at least one vehicle (4) directly following the vehicle (2) travelling ahead follows the vehicle (2) travelling ahead by means of at least largely automatic open-loop/closed-loop control, and wherein there is provision for a car-to-car communication between the vehicle (2) travelling ahead and the at least one vehicle (4) directly following the vehicle (2) travelling ahead for this automatic open-loop/closed-loop control, wherein at least part of the car-to-car communication is provided for as photo-optical, optical-waveguide-less or optical-fibre-less car-to-car communication in which the car-to-car communication is effected in each case between a light wave emitter (10) and a light wave receiver (12), **characterized in that** the light wave emitter (10) provided for is a light wave emitter intended for at least one further purpose, other than the photo-optical communication, and **in that** the light wave receiver (12) provided for is a light wave receiver intended for at least one further purpose, other than the photo-optical communication, wherein the light wave emitter (10) used that is intended for the at least one further purpose, other than the photo-optical communication, is a brake light and/or a clearance lamp and/or a daytime running light, and **in that** the light wave receiver (12) provided for that is intended for the at least one further purpose, other than the photo-optical communication, is a light/rain sensor, wherein the light/rain sensor, in accordance with the further purpose, other than the photo-optical communication, is used for switching on and off a low beam of the vehicle depending on the brightness of the surroundings or for switching on and off a windshield wiper of the vehicle depending on the rain content of the air.

## Revendications

1. Procédé pour faire fonctionner d'une manière automatisée, au moins dans une grande mesure, une colonne (1) non guidée sur rail, constituée d'au moins un véhicule (2) allant devant et d'au moins un véhicule (4) accouplé sans contact au véhicule (2) allant devant et suivant directement le véhicule (2) allant devant, dans lequel le au moins un véhicule (4) suivant directement le véhicule (2) allant devant suit le véhicule (2) allant devant par une commande / régulation automatique au moins dans une grande mesure, et dans lequel, pour cette commande / régulation automatique, une communication voiture à voiture est produite entre le véhicule (2) allant devant et le au moins un véhicule (4) suivant directement le véhicule (2) allant devant, dans lequel, pour au moins une partie de la communication voiture à voiture, on tire parti d'une communication photo-optique sans guide d'ondes lumineuses ou d'une communication voiture à voiture sans fibre optique, qui se produit respectivement entre un émetteur (10) d'ondes lumineuses et un récepteur (12) d'ondes lumineuses, **caractérisé en ce qu'**on tire parti, comme émetteur (10) d'ondes lumineuses, d'un émetteur d'ondes lumineuses prévu pour au moins un autre but différent de la communication photo-optique et comme récepteur (12) d'ondes lumineuses, d'un récepteur d'ondes lumineuses prévu pour au moins un but autre différent de la communication photo-optique, dans lequel, comme émetteur (10) d'ondes lumineuses prévu pour le au moins un but autre différent de la communication photo-optique, on tire parti d'un feu d'arrêt et/ou d'une lampe pour feu de position et/ou d'un feu de circulation de jour et, comme récepteur (12) d'ondes lumineuses prévu pour au moins un but autre différent de la communication photo-optique, on tire parti d'un élément photosensible / capteur de pluie, dans lequel l'élément photosensible / capteur de pluie sert au branchement et au débranchement d'un feu de circulation du véhicule, en fonction de la luminosité de l'environnement, ou au branchement et au débranchement d'un essuie-glace du véhicule, en fonction de la teneur en pluie de l'air.

2. Procédé suivant la revendication 1, **caractérisé en ce que** l'on produit des signaux (20) lumineux modulés par un modulateur (14) électro-optique, on les émet au moyen de l'émetteur (10) d'ondes lumineuses dans l'espace libre entre deux véhicules (2, 4) se succédant directement de la colonne (1), on les reçoit par le récepteur (12) d'ondes lumineuses et on les analyse par un démodulateur (16) électro-optique.

3. Procédé suivant la revendication 1 ou 2, **caractérisé en ce que** la communication photo-optique a lieu par de la lumière dans le domaine infrarouge ou dans le domaine de l'ultraviolet.

4. Procédé suivant l'une des revendications précédentes, **caractérisé en ce que** la communication photo-optique, entre le véhicule (2) allant devant et le au moins un véhicule (4) suivant directement le véhicule (2) allant devant, s'effectue unidirectionnellement ou bidirectionnellement.

5. Procédé suivant l'une des revendications précédentes, **caractérisé en ce que** l'on utilise, comme émetteur (10) d'ondes lumineuses, au moins une DEL (Ligth-Emitting-Diode) et/ou une diode (LD) laser et, comme récepteur (12) d'ondes lumineuses, au moins une photodiode.

6. Procédé suivant l'une des revendications précédentes, **caractérisé en ce que,** supplémentairement à la communication photo-optique entre le véhicule (2) allant devant et le au moins un véhicule (4) suivant directement le véhicule (2) allant devant, a lieu une communication différente d'une communication photo-optique.

7. Système d'assistance au conducteur, dans lequel, au moyen d'un dispositif (8) de communication de voiture à voiture, on maintient au moins un véhicule au sein d'une colonne (1) non guidée sur rail fonctionnant d'une manière automatisée au moins dans une grande mesure, qui est constituée d'un véhicule (2) allant devant et d'au moins un véhicule (4) accouplé sans contact au véhicule (2) allant devant et suivant directement le véhicule (2) allant devant, dans lequel le au moins un véhicule (4) suivant directement le véhicule (2) allant devant suit le véhicule (2) allant devant par une commande / régulation automatique au moins dans une grande mesure, dans lequel au moins une partie du dispositif (8) de communication de voiture à voiture est prévue sous la forme d'un dispositif de communication de voiture à voiture photo-optique sans guide d'ondes lumineuses ou sans fibre optique, dans lequel la communication est prévue respectivement entre un émetteur (10) d'ondes lumineuses et un récepteur (12) d'ondes lumineuses, **caractérisé en ce que** il est prévu, comme émetteur (10) d'ondes lumineuses, d'un émetteur d'ondes lumineuses prévu pour au moins un but autre différent de la communication photo-optique et comme récepteur (12) d'ondes lumineuses, d'un récepteur d'ondes lumineuses prévu pour au moins un but autre différent de la communication photo-optique, dans lequel, comme émetteur (10) d'ondes lumineuses prévu pour le au moins un but autre différent de la communication photo-optique, il est prévu un feu d'arrêt et/ou une lampe pour feu de position et/ou un feu de circulation de jour et, comme récepteur (12) d'ondes lumineuses prévu pour au moins un but autre différent de la communication photo-optique, il est prévu un élément photosensible / capteur de pluie, dans lequel l'élément photosensible / capteur de pluie sert au branchement et au débranchement d'un feu de circulation du véhicule, en fonction de la luminosité de l'environnement, ou au branchement et au débranchement d'un essuie-glace du véhicule, en fonction de la teneur en pluie de l'air.

8. Système d'assistance au conducteur suivant la revendication 7, **caractérisé en ce que** le dispositif de communication de voiture à voiture a au moins un modulateur (14) électro-optique et au moins un démodulateur (16) électro-optique, dans lequel
a) le modulateur (14) électro-optique est constitué de manière à produire des signaux (20) lumineux modulés, et
b) l'émetteur (10) d'ondes lumineuses est constitué de manière à donner les signaux lumineux modulés dans l'espace libre compris entre deux véhicules (2, 4) se suivant directement de la colonne (1), et
c) le récepteur (12) d'ondes lumineuses est constitué de manière à recevoir les signaux lumineux modulés, et
d) le démodulateur (16) est constitué de manière à analyser les signaux lumineux modulés.

9. Système d'assistance au conducteur suivant la revendication 7 ou 8, **caractérisé en ce que** la communication photo-optique est prévue par de la lumière dans le domaine infrarouge et/ou dans le domaine de l'ultraviolet.

10. Système d'assistance au conducteur suivant l'une des revendications 7 à 9, **caractérisé en ce que** la communication photo-optique entre le véhicule (2) allant devant et le au moins un véhicule (4) suivant directement le véhicule (2) allant devant est prévue unidirectionnellement ou bidirectionnellement.

11. Système d'assistance au conducteur suivant l'une des revendications 7 à 10, **caractérisé en ce qu'**il est prévu comme émetteur (10) d'ondes lumineuses au moins une DEL (Light-Emitting-Diode) et/ou une diode (LD) laser et/ou comme récepteur (12) d'ondes lumineuses au moins une photodiode. ;

12. Système d'assistance au conducteur suivant l'une des revendications 7 à 11, **caractérisé en ce qu'**il est prévu supplémentairement à la communication photo-optique entre le véhicule (2) allant devant et le au moins un véhicule (4) suivant directement le véhicule (2) allant devant, il est prévu une communication différente d'une communication photo-optique.

13. Colonne (1) non guidée sur rail fonctionnant de manière automatisée au moins dans une grande mesure constituée au moins d'un véhicule (2) allant devant et d'au moins un véhicule (4) accouplé sans contact au véhicule (2) allant devant et suivant directement le véhicule (2) allant devant, dans lequel le au moins un véhicule (4) suivant directement le véhicule (2) allant devant suit le véhicule (2) allant devant par au moins une commande / régulation automatique au moins dans une grande mesure et dans lequel, pour cette commande / régulation automatique, il est prévu une communication de voiture à voiture entre le véhicule (2) allant devant et le au moins un véhicule (4) suivant directement le véhicule (2) allant devant, dans lequel au moins une partie de la communication de voiture à voiture est prévue sous la forme d'une communication de voiture à voiture photo-optique sans guide d'ondes lumineuses ou sans fibre optique, dans lequel la communication de voiture à voiture s'effectue respectivement entre un émetteur (10) d'ondes lumineuses et un récepteur (12) d'ondes lumineuses, **caractérisé en ce que** il est prévu, comme émetteur (10) d'ondes lumineuses, un émetteur d'ondes lumineuses prévu pour au moins un but autre différent de la communication photo-optique et comme récepteur (12) d'ondes lumineuses, un récepteur d'ondes lumineuses prévu pour au moins un but autre différent de la communication photo-optique, dans lequel, comme émetteur (10) d'ondes lumineuses prévu pour le au moins un autre but différent de la communication photo-optique, il est prévu un feu d'arrêt et/ou une lampe pour feu de position et/ou un feu de circulation de jour et, comme récepteur (12) d'ondes lumineuses prévu pour au moins un but autre différent de la communication photo-optique, il est prévu un élément photosensible / capteur de pluie, dans lequel l'élément photosensible / capteur de pluie sert au branchement et au débranchement d'un feu de circulation du véhicule, en fonction de la luminosité de l'environnement, ou au branchement et au débranchement d'un essuie-glace du véhicule, en fonction de la teneur en pluie de l'air.
